# EUROPÄISCHE PATENTSCHRIFT

(11) **EP 4 151 864 B1**
(45) Veröffentlichungstag und Bekanntmachung des Hinweises auf die Patenterteilung: **28.05.2025**
(21) Anmeldenummer: 22196052.9
(22) Anmeldetag: 16.09.2022
(51) Int. Cl.: F16B 5/06, F16B 5/12, F16B 2/08, F16B 2/12

(54) **MODULARER KANTENCLIP**
MODULAR EDGE CLIP
PINCE DE BORDURE MODULAIRE

(30) Priorität: 17.09.2021 DE 202021105021 U
(43) Veröffentlichungstag der Anmeldung: 22.03.2023
(73) Patentinhaber: HellermannTyton GmbH & Co. KG, 25436 Tornesch (DE)
(72) Erfinder: Villbrandt, Ute, 24558 Henstedt-Ulzburg (DE); Schiwek, Björn, 25436 Tornesch (DE)
(74) Vertreter: Hernandez, Yorck

(56) Entgegenhaltungen:
- CN-A- 105 351 631
- DE-A1- 102010 007 256
- FR-A- 1 110 957
- US-B2- 10 316 991

## Beschreibung

### Gebiet der Erfindung

Die vorliegende Offenbarung bezieht sich auf einen Kantenclip zum Befestigen eines Befestigungselements wie beispielsweise einen Kabelbinder an einer Kante eines Objekts wie beispielsweise einem Blech.

### Hintergrund

Um einen oder mehrere Gegenstände an einer Kante eines Objekts zu befestigen, sind aus dem Stand der Technik verschiedene Arten von Kantenclips, welche auch als Kantenklammern bezeichnet werden können, bekannt. Typischerweise sind derartige Kantenclips dabei aus zwei Teilen zusammengesetzt, nämlich einem äußeren Kunststoffteil und einem inneren Metallteil. Das äußere Kunststoffteil weist meist ein Halteelement wie beispielsweise eine Schlaufe oder Öse zum Befestigen des Befestigungselements, beispielsweise eines Kabelbinders, an den Kantenclip und somit mittelbar zum Befestigen des oder der Gegenstände, beispielsweise eines Bündelguts an der Kante, auf. Alternativ kann das Befestigungselement auch mit dem äußeren Kunststoffteil vergossen sein und somit direkt Teil des Kantenclips sein. Das innere Metallteil ist im Allgemeinen in Form einer U-förmige Metallklammer In den äußeren Teil eingelegt und mit dem äußeren Teil verrastet. Die U-förmige Metallklammer weist dabei an den Innenseiten der Schenkel, welche einen Spalt bilden, in welchen die Kante des Objekts zum Befestigen des Kantenclips an der Kante einführbar ist, mehrere Rastklauen auf, welche beim Einführen der Kante in einer Einführrichtung aufgebogen werden, und sich bei einem Zug entgegen der Einführrichtung derart in dem Spalt verspreizen, dass das Objekt nicht ohne erheblichen Kraftaufwand, welcher oft mit einer Zerstörung des Kantenclips einhergeht, entfernbar ist. Derartige Kantenclips sind beispielsweise aus der CN 105 351 631 A, der CN 105 346 484 A, der CN 106 439 237 A, der CN 203 309 368 U, oder der US 2010/199 463 A1 bekannt.

Die US 10 316 991 B2 offenbart eine Montageklammervorrichtung, die so konfiguriert ist, dass sie ein oder mehrere langgestreckte Elemente von einem freitragenden Träger trägt. Die Montageklammervorrichtung umfasst einen Klammerkörper mit einer stationären Klemmbacke, die eine erste Klemmfläche bildet. Der Klammerkörper definiert eine Vielzahl von Klammerkörperzähnen und ein Ratschenelement, das gleitend am Klammerkörper befestigt ist. Das Ratschenelement hat eine bewegliche Backe, die eine zweite Klemmfläche gegenüber der ersten Klemmfläche bildet. Das Ratschenelement weist ferner eine Vielzahl von Ratschenelementzähnen auf, die so konfiguriert sind, dass sie in die Zähne des Klammerkörpers eingreifen. Die mehreren Zähne des Ratschenelements haben ein Sägezahnprofil, wodurch eine Klemmkraft bereitgestellt wird, die die stationäre Klemmbacke und die bewegliche Klemmbacke gleitend aufeinander zu bewegt, die geringer ist als eine Lösungskraft, die die stationäre Klemmbacke und die bewegliche Klemmbacke voneinander weg bewegt.

Nachteilig an den bisherigen Lösungen ist, dass spezifische Anwendungen, beispielsweise unterschiedliche Dicken der Objekte, bei welchen es sich oft um Bleche handelt, oder unterschiedliche Anforderungen an eine Positionierung des Befestigungselements an dem Kantenclip relativ zur Kante jeweils individuell entwickelte und produzierte Kantenclips erfordern, um das Befestigungselement und damit mittelbar auch den mit dem Befestigungselement an der Kante des Objekts zu befestigende Gegenstand zuverlässig an dem Objekt zu halten.

Entsprechend stellt sich die Aufgabe, die bisherigen Nachteile zu überwinden und mit geringem Aufwand einen flexibel einsetzbaren Kantenclip zum zuverlässigen Befestigen eines Befestigungselements an einer Kante eines Objekts bereitzustellen.

### Zusammenfassung

Diese Aufgabe wird durch die Gegenstände der unabhängigen Ansprüche gelöst. Vorteilhafte Ausführungsformen ergeben sich aus den abhängigen Ansprüchen, der Beschreibung und den Figuren.

Ein Aspekt bezieht sich auf einen modularen Kantenclip zum Befestigen eines Befestigungselements wie beispielsweise einem Kabelbinder an einer Kante eines Objekts wie beispielsweise einem Blech. Unter einem modularen Kantenclip kann hier ein modular aufgebauter Kantenclip verstanden werden, welcher verschiedene Module unterschiedlicher Modultypen aufweist, wobei die Module unterschiedlicher Modultypen über einheitliche mechanische Schnittstellen wie sie im Folgenden durch ein Rastverbindungselement realisiert wird, miteinander kombinierbar, im vorliegenden Fall verbindbar sind.

Entsprechend weist der vorliegende Kantenclip ein erstes Kantenclip-Modul eines ersten Modultyps sowie ein zweites Kantenclip-Modul eines von dem ersten Modultyp verschiedenen zweiten Modultyps auf. Das erste Kantenclip-Modul hat ein Halteelement, beispielsweise eine Schlaufe oder Öse für besagten Kabelbinder, zum Befestigen des Befestigungselements an dem Kantenclip-Modul. Das Befestigungselement kann auch Teil des Kantenclip-Moduls sein, beispielsweise indem das Halteelement einstückig mit dem Befestigungselement ausgeführt ist. So kann das Halteelement beispielsweise die Form eines mit dem Kabelbinder vergossenen Fußes annehmen, welcher dann mit dem Kabelbinder Teil der ersten Kantenclip-Moduls ist. Das erste Kantenclip-Modul hat ferner ein Rastelement, das erste Rastelement, mit zumindest zwei Rastklauen, welche in Zusammenwirken mit dem als Gegenlager dienenden zweiten Kantenclip-Modul ausgebildet sind zum Verrasten oder Feststellen, und damit Befestigen des Kantenclips an der Kante des Objekts. Auch hat das erste Kantenclip-Modul ein Rastverbindungselement, das erste Rastverbindungselement, zum Verbinden des ersten Kantenclip-Moduls mit dem zweiten Kantenclip-Modul durch eine Rastverbindung.

Entsprechend hat das zweite Kantenclip-Modul ebenfalls ein Rastelement, das zweite Rastelement, mit zumindest zwei Rastklauen, welche in Zusammenwirken mit dem als Gegenlager dienenden ersten Kantenclip-Modul ausgebildet sind zum Verrasten oder Feststellen, und damit Befestigen des Kantenclips an der Kante, und ein als Gegenstück zu dem ersten Rastverbindungselement (dem Rastverbindungselement des ersten Kantenclip-Moduls) ausgeführtes Rastverbindungselement, das zweite Rastverbindungselement, zum Verbinden des ersten Kantenclip-Moduls mit dem zweiten Kantenclip-Modul durch die Rastverbindung. Die jeweiligen Verriegelungselemente können auch als Eingreifelemente bezeichnet werden. Die jeweiligen Rastverbindungselemente können dabei nach Art einer verrastenden Stecker-Buchse-Verbindung ausgebildet sein, wobei es unerheblich ist, welches der beiden Rastverbindungselemente Stecker (oder männliches Rastverbindungselement) und welches Buchse (oder weibliches Rastverbindungselement) ist. In Abhängigkeit der Art des bestimmungsgemäßen Gebrauchs des Kantenclips sollte die durch die Rastverbindungselemente erzeugbare Rastverbindung ausreichend stabil und möglichst spielfrei sein. Insbesondere kann die Rastverbindung dabei eine werkzeugfrei nicht lösbare Rastverbindung und/oder eine nicht zerstörungsfrei lösbare Rastverbindung sein oder umfassen. Zur Erhöhung der Stabilität der Verbindung der beiden Kantenclip-Module können die beiden Kantenclip-Module zusätzlich zur Rastverbindung, insbesondere an den Rastverbindungselementen, stofflich miteinander verbunden werden, insbesondere durch Sonotrodenschweißen (Ultraschallschweißen).

Im durch die Rastverbindungselemente verbundenen Zustand der beiden Kantenclip-Module, also in miteinander verrastetem Zustand der beiden Kantenclip-Module, wird dabei zwischen den jeweiligen Rastelementen ein Spalt gebildet, in welchen die Kante des Objekts zum bestimmungsgemäßen Befestigen des Kantenclips an der Kante zumindest teilweise, also teilweise oder vollständig, in einer Einführrichtung einführbar ist. Die Rastelemente der unterschiedlichen Kantenclip-Module sind somit vorzugsweise entsprechend der Schenkel der bekannten U-förmigen Metallklammern angeordnet und übernehmen auch die dort aus dem Stand der Technik bekannte Funktion.

Dieser Aufbau hat den Vorteil, dass der Kantenclip durch eine geeignete Wahl der jeweiligen Kantenclip-Module schnell an die jeweilige Anwendung angepasst werden kann, beispielsweise an unterschiedliche Dicken der Kante bzw. des Objektes und/oder unterschiedliche Arten von Befestigungselementen und/oder unterschiedliche Positionen der Befestigungselemente relativ zu der Kante des Objekts, und zwar indem jeweils unterschiedliche, für die jeweilige Anwendung geeignete Kantenclip-Module ausgewählt und miteinander kombiniert, d.h. durch die Rastverbindungselemente miteinander verbunden werden. Dabei wird durch die Verwendung der zwei separaten Rastelemente vermieden, das die aus dem Stand der Technik bekannten U-förmigen Metallklammern jeweils individuell an die spezifische Anwendung, insbesondere an die Dicke der Kante, angepasst und somit separat mit unterschiedlichen Werkzeugen hergestellt werden müssen. Vielmehr ist es für die verlässliche Funktion der jeweiligen Rastelemente unerheblich, welcher Art das Kantenclip-Modul des anderen Rastelements ist. Gerade das Fertigen der unterschiedlichen Metallklammern ist mit einem großen Entwicklungs- und Materialaufwand verbunden, so dass die diesbezüglichen Vorteile besonders ins Gewicht fallen.

Erfindungsgemäß ist dabei vorgesehen, dass die Kantenclip-Module je ein Aufnahmeelement zum Aufnehmen des jeweiligen Rastelements aufweisen, wobei insbesondere Aufnahmeelement und Halteelement und Rastverbindungselement des ersten Kantenclip-Moduls sowie Aufnahmeelement und Rastverbindungselement des zweiten Kantenclip-Moduls jeweils einteilig aus einem Kunststoff gefertigt sind, beispielsweise mittels eines Spritzgußverfahrens. Der Kunststoff kann beispielsweise ein glasfaserverstärkter Kunstoff sein oder einen solchen umfassen. Aufnahmeelement und Halteelement und Rastverbindungselement bzw. Aufnahmeelement und Rastverbindungselement können dabei Teil eines jeweiligen zugehörigen -beispielsweise U-förmigen-Kantenclip-Modul-Körpers sein. Das hat den Vorteil, dass die beiden Kantenclip-Module besonders einfach hergestellt werden können und über die Anpassung der jeweiligen Aufnahmeelemente an die in der jeweiligen Anwendung zwischen Rastelementen und Halteelement zu übertragenden Kräfte angepasst werden können.

Entsprechend kann hier vorgesehen sein, dass die Rastelemente jeweils zumindest ein Rastelement-Halteelement zum Halten des Rastelements an dem zugehörigen Aufnahmeelement und damit im restlichen Kantenclip-Modul aufweisen, wobei eine Haupterstreckungsrichtung des Rastelement-Halteelements bevorzugt längs der Einführrichtung verläuft. Insbesondere kann das Rastelement-Halteelement ein Einrastelement wie beispielsweise eine Öse, die ausgebildet ist zum Aufnehmen einer Zunge des zugeordneten Aufnahmeelements, sein oder umfassen. Dadurch, dass die Haupterstreckungsrichtung längs der Einführrichtung verläuft, erstreckt sich das Rastelement-Halteelement vorwiegend parallel zu auftretenden Zugkräften, welche bei der üblichen Anwendung von Kantenclips längs der Einführrichtung zu erwarten sind. Entsprechend können die Rastelement-Halteelemente besonders genau an die für das Halten des Rastelements im Aufnahmeelement erforderlichen (geringen) Kräfte dimensioniert werden ohne das die Gefahr eines Abbrechens der Rastelemente besteht. Daher kann der Kantenclip besonders effektiv und effizient hergestellt werden.

Es kann auch vorgesehen sein, dass die Rastelemente jeweils zumindest ein Führungselement zum Führen des Rastelements relativ zum Aufnahmeelement und damit dem restlichen Kantenclip-Modul aufweisen, dessen jeweilige Haupterstreckungsrichtung bevorzugt quer zur Einführrichtung verläuft. Insbesondere kann das Führungselement eine Lasche sein oder umfassen welche in eine Öffnung des Aufnahmeelementes greift, alternativ oder ergänzend auch eine Öse, welche entsprechend eine Zunge des zugehörigen Aufnahmeelements aufnimmt. Dadurch, dass die Haupterstreckungsrichtung quer zur Einführrichtung und damit quer zu den auftretenden, zu erwartenden Kräften verläuft, können die Kräfte besonders großflächig auf das Aufnahmeelement und damit den restlichen Kantenclip übertragen werden. Auch dies ermöglicht somit eine besonders effektive Dimensionierung der Halterung, wobei gerade bei der Verwendung von metallischen Rastelementen in Kombination mit einem Aufnahmeelement aus Kunststoff große Vorteile erreicht werden, da so auftretende Zugkräfte besonders schonend von dem Rastelement in den restlichen Kantenclip übertragen werden können.

Die Führungselemente dienen somit in erster Linie der Übertragung der Kräfte von Rastelement auf Aufnahmeelement und umgekehrt, welche bei bestimmungsgemäßem Gebrauch des Kantenclips für das Befestigen des Befestigungselementes an dem Objekts auftreten und sind entsprechend diesbezüglich optimiert. Die Rastelement-Halteelemente hingegen dienen in erster Linie dem Halten des Rastelements in oder an dem Aufnahmeelement nach der Vormontage der Rastelemente in den Kantenclip-Modulen, damit die Rastelemente nicht vor der Endmontage, d.h. vor dem Einführen der Kante in den Spalt zwischen den Rastelementen aus dem Aufnahmeelement fallen und verloren gehen. Zusätzlich kann durch die Rastelement-Halteelemente nach der Endmontage ein Spiel der Rastelemente relativ zu den Aufnahmeelementen verringert werden. Entsprechend sind das zumindest eine Rastelement-Halteelement und das zumindest eine Führungselement eines zugehörigen Rastelements bevorzugt jeweils voneinander verschiedene und damit unabhängige Elemente, welche individuell und damit effizient an die jeweiligen Anforderungen anpassbar sind.

Insbesondere können mehrere Rastelement-Halteelemente und/oder mehrere Führungselemente je Rastelement vorgesehen sein, wodurch die Kräfte nochmals besser verteilt werden und eine genauere und verlässlichere Anordnung der Rastelemente relativ zu den zugehörigen Aufnahmeelementen erreicht wird. Alternativ oder ergänzend zu dem oder den Halte-/Führungselementen können die Rastelemente mit dem Aufnahmeelement vergossen sein.

In einer weiteren vorteilhaften Ausführungsform ist vorgesehen, dass zumindest eine Rastklaue, also eine oder mehrere oder alle Rastklauen, eines oder beider Rastelements eine jeweilige Hohlkehle aufweist, insbesondere an einem Übergang von einem aus einer Haupterstreckungsebene des jeweiligen Rastelements herausragenden Teils der Rastklaue zu einem in der Haupterstreckungsebene liegenden anderen Teil des Rastelements oder zu einem in der Haupterstreckungsebene liegenden anderen Teil der Rastklaue. Das hat den Vorteil, dass die Rastklauen eine höhere Festigkeit aufweisen, d.h. besonders große Kräfte übertragen können. Die Verwendung einer Hohlkehle ist in den bekannten Anwendungen nur erschwert möglich, da die bekannten U-förmigen Metallklammern dann nicht mehr in die äußere Kunststoffhülle eingelegt werden können.

In einer weiteren vorteilhaften Ausführungsform ist vorgesehen, dass die Rastelemente der unterschiedlichen Kantenclip-Module baugleich ausgeführt sind, insbesondere mit Rastklauen aus Metall. Alternativ oder ergänzend können die Rastelemente je einteilig aus einem Metall-Stanz-Biege-Teil gefertigt sein oder ein solches umfassen. Durch die baugleichen Rastelemente, deren Verwendung in dem hier beschriebenen modularen Ansatz auch in unterschiedlichen Anwendungen ermöglicht wird, wird der Aufwand in der Herstellung verringert, Material gespart, und das Einsatzfeld der Rastelemente und der zugehörigen Kantenclips erhöht. Die Verwendung von Metall erhöht dabei die Stabilität und potenziert gleichzeitig die erzielten Vorteile, da hier aufgrund der allgemein höheren Produktionsaufwände auch die entsprechenden, in dem modularen Ansatz erzielten Vorteile besonders groß sind.

In einer weiteren vorteilhaften Ausführungsform ist vorgesehen, dass das erste Kantenclip-Modul und/oder das zweite Kantenclip-Modul zumindest ein Transporteindringschutz-Element aufweist, welches an einer Mündung des Spalts, durch welche die Kante des Objekts zum Befestigen des Kantenclips an der Kante in der Einführrichtung einführbar ist, und/oder im Spaltangeordnet ist, insbesondere in Form eines oder mehrerer Finger, welche sich quer zur Einführrichtung erstrecken und somit ein unabsichtliches Einführen und eine daraus resultierende mögliche Beschädigung beispielsweise von Kabeln, aber auch ein Verletzen eines unabsichtlich in den Spalt eingeführten Fingers verhindern. Entsprechend kann das zumindest eine Transport-Eindringschutzelement eine jeweilige Sollbruchstelle aufweisen, beispielsweise an einem dem restlichen Kantenclip-Modul zugewandten Fuß des Fingers, so dass es vor der Endmontage leicht, also beispielsweise durch einen Anwender werkzeugfrei eingedrückt oder mit einem Messer entfernt werden kann. Dadurch werden die Rastklauen von der Umgebung abgeschirmt, so dass die Gefahr einer Beschädigung oder einer Verletzung reduziert wird. Bevorzugt ist das zumindest eine Transporteindringschutz-Element einteilig mit Aufnahmeelement und Halteelement und Rastverbindungselement des ersten Kantenclip-Moduls bzw. einteilig mit dem Aufnahmeelement und dem Rastverbindungselement des zweiten Kantenclip-Moduls gefertigt.

In einer anderen vorteilhaften Ausführungsform ist vorgesehen, dass zumindest eines der Rastverbindungselemente als ein Mehrfach-Rastverbindungselement mit einem Rastverbindungs-Unterelement ausgebildet ist, welches bei dem Verbinden der beiden Kantenclip-Module mit dem Rastverbindungselement ein Verrasten in mehreren unterschiedlichen Positionen entlang einer Verrastrichtung, welche quer zur Haupterstreckungsebene des Spalts verläuft, erlaubt, so dass den unterschiedlichen Positionen entsprechend unterschiedliche Breiten für den Spalt einstellbar sind. Dies hat den Vorteil einer weiteren Flexibilisierung des Kantenclips, da je nach Anwendung bereits mit ein und der selben Kombination von Kantenclip-Modulen durch eine unterschiedlich tiefe Verrastung, d.h. eben ein Verrasten in unterschiedlichen Positionen entlang der Verrastrichtung, ein verlässliches Befestigen des Kantenclips an der Kante erreicht werden kann. Überdies kann so eine jeweilige Breite des Spalts auch erst nach dem Einführen der Kante in den Spalt eingestellt werden, was beispielsweise bei einem lackierten Blech als Objekt wünschenswert ist, da so ein besonders schonendes Aufbringen des Kantenclips auf die Kante erreicht wird.

Ein weiterer Aspekt betrifft ein Kantenclip-System mit einem derartigen Kantenclip, umfassend mehrere unterschiedliche erste Kantenclip-Module (jeweiliger unterschiedlicher erster Modultypen) und/oder mehrere unterschiedliche zweite Kantenclip-Module (jeweiliger unterschiedlicher zweiter Modultypen), wobei mittels der jeweiligen Rastverbindungselemente ein beliebiges der ersten Kantenclip-Module mit einem beliebigen der zweiten Kantenclip-Module verbindbar und somit kombinierbar ist. Insbesondere kann das Kantenclip-System nur einen ersten Kantenclip-Modul und eine Vielzahl unterschiedlicher zweiter Kantenclip-Module oder nur einen zweiten Kantenclip-Modul und eine Vielzahl unterschiedlicher erster Kantenclip-Module umfassen. Die Typen beziehen sich auf die jeweiligen abstrakten Kategorien, in die die jeweiligen Kantenclip-Module eingeordnet werden können. Die Rastverbindungselemente können somit innerhalb des Kantenclip-Systems als standardisiert und/oder vereinheitlicht bezeichnet werden. Das hat den Vorteil, dass mit besonders geringem Aufwand für unterschiedliche Anwendungen jeweils optimierte Kantenclips durch die unterschiedlichen Kombinationen erzeugbar sind.

In einer vorteilhaften Ausführungsform ist dabei vorgesehen, dass die unterschiedlichen ersten Kantenclip-Module jeweils unterschiedliche Halteelemente aufweisen, welche jeweils zum Befestigen von Befestigungselementen unterschiedlicher Typen an den ersten Kantenclip-Modulen ausgebildet sind und/oder welche jeweils an unterschiedlichen Positionen relativ zu dem Spalt und damit dem jeweiligen Rastelement angeordnet sind. Das hat den Vorteil, dass durch das Kantenclipsystem mit geringem Aufwand ein Kantenclip erzeugt werden kann, welcher dem Befestigen von einem Befestigungselement eines spezifischen Typs und/oder in einer spezifischen Anwendung dient.

In einer weiteren vorteilhaften Ausführungsform ist vorgesehen, dass die unterschiedlichen ersten Kantenclip-Module und/oder die unterschiedlichen zweiten Kantenclip-Module jeweils eine unterschiedlich große Erstreckung in einer Richtung senkrecht zur Haupterstreckungsebene des Spalts aufweisen, so dass durch Kombination unterschiedlicher Kantenclip-Module des einen Kantentyp-Modultyps mit einem gleichbleibenden Kantenclip-Modul des anderen Modultyps bei Verbinden des jeweils kombinierten ersten und zweiten Kantenclip-Moduls durch die Rastverbindungselemente unterschiedlich breite Spalten bildbar sind. Bevorzugt kann die Breite der Spalten in einem Bereich von 8mm bis 16mm variieren. Die Erstreckung kann insbesondere ausgehend von dem Rastelement oder der Haupterstreckungsebene des Rastelements in Richtung des Spaltes gemessen werden, d.h. in die Richtung, in welcher sich bei montiertem anderen Kantenclip-Module das andere Kantenclip-Modul befindet. Das hat den Vorteil, dass mit geringem Fertigungsaufwand spezifische Kantenclips, welche auf unterschiedlich dicke Kanten optimiert sind, bereitgestellt werden können.

Besonders vorteilhaft ist hier, wenn die unterschiedlichen ersten Kantenclip-Module jeweils unterschiedliche Halteelemente und/oder Halteelemente an unterschiedlichen Positionen relativ zu dem Spalt aufweisen und nur die unterschiedlichen zweiten Kantenclip-Module jeweils eine unterschiedlich große Erstreckung in der Richtung senkrecht zur Haupterstreckungsebene des Spalts aufweisen in der genannten Weise, da dann durch die gezielte Variation jeweils nur eines Parameters der gewünschte Kantenclip an eine einzige jeweilige Kenngröße, nämlich die Breite des Spalts und den Typ des Befestigungselements bzw. dessen Position relativ zu dem Spalt angepasst werden kann. Hier hat sich ergeben, dass gerade diese beiden Parameter für die meisten Anwendungen maßgeblich und somit idealerweise getrennt in dem Produkt abgebildet werden.

Ein Aspekt betrifft auch ein erstes Kantenclip-Modul und/oder ein zweites Kantenclip-Modul von einem (oder für einen) der beschriebenen Kantenclips und/oder einem (eines) der beschriebenen Kantenclip-Systeme. Dementsprechend umfasst das jeweilige erste/zweite Kantenclip-Modul die im Zusammenhang mit dem vollständigen jeweiligen Kantenclip beschriebenen Merkmale, die für das jeweilige erste/zweite Kantenclip-Modul relevant sind. Vorteile und vorteilhafte Ausführungsformen entsprechen hier den für den Kantenclip bzw. das Kantenclip-System beschriebenen Vorteilen und vorteilhaften Ausführungsformen.

Ein weiterer Aspekt betrifft ein Verfahren zum Vormontieren eines modularen Kantenclips, welcher zum Befestigen eines Befestigungselements an einer Kante eines Objekts ausgebildet ist und ein erstes Kantenclip-Modul sowie ein zweites Kantenclip-Modul aufweist. Das Verfahren umfasst dabei ein jeweiliges Einlegen eines Rastelements mit zumindest zwei Rastklauen in das jeweilige restliche Kantenclip-Modul in einer ersten Richtung relativ zum restlichen Kantenclip-Modul, ein Verbinden der jeweiligen Rastelemente mit dem jeweils zugeordneten restlichen Kantenclip-Modul, sowie ein Erzeugen einer Rastverbindung zwischen den beiden Kantenclip-Modulen durch ein Ineinanderschieben der beiden Kantenclip-Module entlang einer zweiten Richtung relativ zu den jeweiligen Kantenclip-Modulen. Dabei verlaufen die erste und/oder die zweite Richtung quer zu einer Haupterstreckungsebene eines Spalts zwischen den Kantenclip-Modulen, in welchem die Kante des Objekts zum Befestigen des Kantenclips an der Kante in einer Einführrichtung einführbar ist.

Vorteil und vorteilhafte Ausführungsformen des Verfahrens entsprechen hier den für das Kantenclip-System bzw. den Kantenclip und die jeweiligen Kantenclip-Module beschriebenen Vorteilen und vorteilhaften Ausführungsformen.

Unter "quer" bzw. "längs" kann im Rahmen der vorliegenden Offenbarung "im wesentlichen senkrecht" bzw. "im wesentlichen parallel" verstanden werden. Dabei bezeichnet "im wesentlichen senkrecht" bzw. "im wesentlichen parallel" "bis auf eine vorgegebene Abweichung senkrecht/parallel", wobei die vorgegebene Abweichung beispielsweise 2°, 5°, 10° oder 15° betragen kann.

Die in der vorstehenden Beschreibung, auch im einleitenden Teil, genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Anhand der in den nachfolgenden Figuren gezeigten schematischen Zeichnungen soll der erfindungsgemäße Gegenstand näher erläutert werden, ohne diesen auf die hier gezeigten spezifischen Ausführungsformen einschränken zu wollen. Dabei zeigen:
Fig. 1 eine beispielhaften Ausführungsform eines an einer Kante eines beispielhaften Objekts befestigten modularen Kantenclips in einer perspektivischen Ansicht;
Fig. 2 den Kantenclip aus Fig. 1 in unbefestigtem Zustand ohne eingeführtes Objekt in einer weiteren perspektivischen Ansicht;
Fig. 3 eine beispielhafte Ausführungsform eines Rastelements für einen modularen Kantenclip in einer perspektivischen Ansicht;
Fig. 4 eine beispielhafte Ausführungsform eines ersten Kantenclip-Moduls, gezeigt ohne Rastelement in einer perspektivischen Ansicht;
Fig. 5 ein Einlegen des Rastelements aus Fig. 3 in das Kantenclip-Modul von Fig. 4 entlang einer ersten Richtung in einer perspektivischen Ansicht;
Fig. 6 das vormontierte erste Kantenclip-Modul entsprechend der Figuren 3 bis 5 in einer perspektivischen Ansicht;
Fig. 7 ein Einlegen des Rastelements aus Fig. 3 in eine beispielhafte Ausführungsform eines zweiten Kantenclip-Moduls entlang der ersten Richtung in einer perspektivischen Ansicht;
Fig. 8 das vormontierte zweite Kantenclip-Modul entsprechend Fig. 7 in einer perspektivischen Ansicht;
Fig. 9 ein Verbinden der beiden Kantenclip-Module aus Fig. 6 und Fig. 8 durch ein Ineinanderschieben entlang einer zweiten Richtung in einer perspektivischen Ansicht;
Fig. 10 eine weitere beispielhafte Ausführungsform eines ersten Kantenclip-Moduls in einer perspektivischen Ansicht;
Fig. 11 ein beispielhafter Kantenclip mit dem zweiten Kantenclip-Modul von Fig. 10 und dem ersten Kantenclip-Modul von Fig. 9 in einer perspektivischen Ansicht;
Fig. 12 eine weitere beispielhafte Ausführungsform eines ersten Kantenclip-Moduls für einen größeren Spalt in einer perspektivischen Ansicht;
Fig. 13 ein beispielhafter Kantenclip mit dem zweiten Kantenclip-Modul von Fig. 12 und dem ersten Kantenclip-Modul von Fig. 9 in einer perspektivischen Ansicht; sowie
Fig. 14 eine weitere beispielhafte Ausführungsform eines Kantenclip-Moduls mit einer anderen beispielhaften Ausführungsform eines zweiten Kantenclip-Moduls in einer perspektivischen Ansicht.

In den unterschiedlichen Figuren werden dabei gleiche oder funktionsgleiche Elemente mit den gleichen Bezugszeichen versehen.

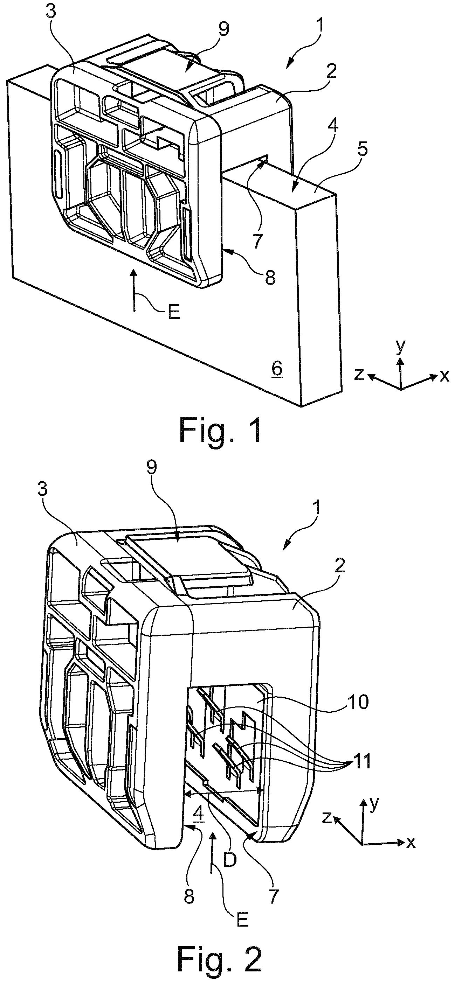

Fig. 1 zeigt eine perspektivische Ansicht eines beispielhaften modularen Kantenclips 1 zum Befestigen eines Befestigungselements an einer Kante 5 eines Objekts 6. Vorliegend weist der modulare Kantenclip 1 ein erstes Kantenclip-Modul 2 sowie ein zweites Kantenclip-Modul 3 auf, welche durch eine vorliegend nicht dargestellte Rastverbindung miteinander verbunden sind. In einem Spalt 4, welcher durch das erste Kantenclip-Modul 2 und das zweite Kantenclip-Modul 3 in verbundenem (und damit wie hier gezeigt verrastetem) Zustand gebildet wird, ist vorliegend eine Kante 5 eines Objekts 6 eingeführt, so dass die Innenseiten zweier Wangen 7, 8 des Kantenclips 1, welche den Spalt 4 begrenzen, vorliegend verdeckt sind. Die Einführrichtung E, in welche die Kante 5 bei bestimmungsgemäßem Gebrauch in den Spalt 4 eingeführt wird, fällt vorliegend mit der positiven y-Richtung zusammen. Die Haupterstreckungsebene des Spalts ist vorliegend entsprechend die y-z-Ebene.

Im gezeigten Beispiel ist an der Oberseite des ersten Kantenclip-Moduls 2, d.h. an dessen in positiver y-Richtung orientierter Seite, ein Halteelement 9 zum Befestigen des Befestigungselementes an dem Kantenclip-Modul 1 angeordnet. Das Halteelement 9 hat vorliegend die Form einer Mehrfachöse, in welche von unterschiedlichen Richtungen ein Kabelbinder eingeführt und damit befestigt werden kann.

In Fig. 2 ist der beispielhafte Kantenclip 1 von Fig. 1 ohne in den Spalt 4 eingeführte Kante 5 dargestellt. Entsprechend ist nun auch die Wange 7 des ersten Kantenclip-Moduls 2 sichtbar. An der Wange 7 ist ein beispielhaftes Rastelement 10 mit zumindest zwei, vorliegend fünf Rastklauen 11, angeordnet. Die Rastklauen 11 verhindern, wie aus dem Stand der Technik bekannt, nach Einführen des Objekts 6 in den Spalt 4 in Einführrichtung E dessen Herausrutschen aus dem Spalt 4 entgegen der Einführrichtung E, wobei das zweite Kantenclip-Modul 3 als Gegenlager oder Gegenhalt für die gezeigten Rastklauen 11 des Rastelements 10 des ersten Kantenclip-Moduls 2 dient. Das zweite Kantenclip-Modul 3 weist entsprechend an seiner innenliegenden Wange 8 ein analog ausgeführtes Rastelement auf.

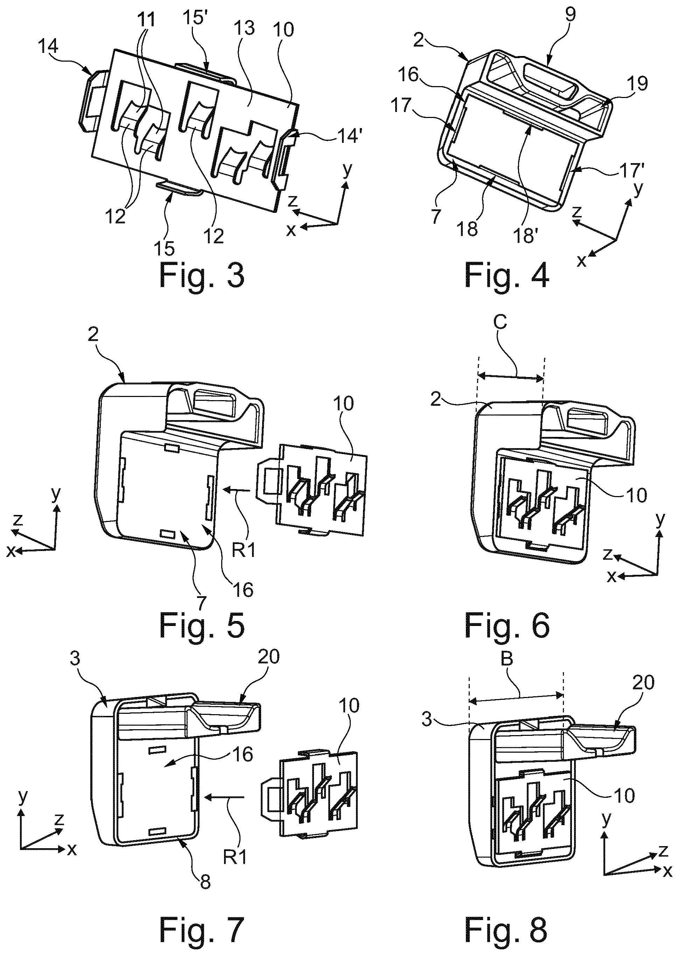

In Fig. 3 ist eine beispielhafte Ausführungsform des Rastelements 10 aus Fig. 2 dargestellt. In der vorliegenden Ausführungsform ist das Rastelement 10 ein Metall-Stanz-Biege-Teil, welches mehrere, vorliegend fünf, Rastklauen 11 aufweist. Die Haupterstreckungsebene des Rastelements 10 ist dabei vorliegend die z-y-Ebene, aus welcher die Rastklauen 11 hier in negativer x-Richtung herausragen. Dabei weisen die Rastklauen 11 vorliegend jeweilige Hohlkehlen 12 auf, hier an einem Übergang zwischen dem aus der Haupterstreckungsebene herausragenden Teil der Rastklauen 11 und dem restlichen Rastelement 10, welches vorliegend noch einen Ansatz der Rastklauen 11 mit umfasst. Der in der Haupterstreckungsebene liegende Teil des Rastelements 10 kann dabei auch als Träger 13 bezeichnet werden. DieserTräger 13 hat vorliegend eine beispielhafte rechteckige Form. An zwei gegenüberliegenden Enden Trägers 13 und damit des Rastelements 10 sind im gezeigten Beispiel jeweilige Halteelemente 14, 14', welche vorliegend als ein Einrastelement in Form einer Öse ausgestanzt und aus der Haupterstreckungsebene herausgebogen sind, angebracht. Diese sind ausgelegt zum Halten des Rastelements 10 an dem restlichen Kantenclip-Modul 2, insbesondere den in Fig. 4 nochmal erläuterten Aufnahmeelement 7. Die Haupterstreckungsrichtung der Halteelemente 14, 14' verläuft vorliegend entlang der y-Richtung.

Im gezeigten Beispiel weist das Rastelement 10 auch jeweilige Führungselemente 15, 15' an anderen gegenüberliegenden Enden des Trägers 13 und damit des Rastelements 10 auf. Diese sind vorliegend in Form von aus der Haupterstreckungsebene herausgebogenen Laschen implementiert. Die Führungselemente 15, 15' sind dabei ausgebildet, Kräfte, welche parallel zur Einführrichtung E, also in positiver oder vor allem negativer y-Richtung, von dem Rastelement 10 aufgenommen werden, möglichst schonend auf das restliche Kantenclip-Modul 2 zu übertragen. Entsprechend haben die Führungselemente 15, 15' vorliegend eine Haupterstreckungsrichtung, welche in z-Richtung quer zur Einführrichtung E verläuft. Im gezeigten Beispiel sind die beiden Führungselemente 15, 15' unterschiedlich lang in ihrer Haupterstreckungsrichtung ausgebildet, was, wie aus Fig. 4 ersichtlich, eine Montierhilfe ist, um eine falsche Orientierung bei dem Vormontieren des Rastelements 10 in dem ersten oder auch zweiten Kantenclip-Modul 2, 3 zu verhindern.

In Fig. 4 ist das erste Kantenclip-Modul 2 ohne Rastelement 10 gezeigt. Entsprechend den Halteelementen 14, 14' bzw. den Führungselementen 15, 15' weist ein zum Aufnehmen des Rastelements 10 bestimmtes Aufnahmeelement 16, im gezeigten Beispiel jeweilige an die entsprechenden Ausdehnungen angebrachte Aussparungen 17, 17' bzw. 18, 18' auf.

Da das erste Kantenclip-Modul 2 isoliert gezeigt ist, ist auch das Rastverbindungselement 19 zum Verbinden des ersten Kantenclip-Moduls 2 mit dem dem zweiten Kantenclip-Modul 3 nun sichtbar. Es weist vorliegend eine tunnelartige Aussparung auf, in welche das korrespondierende Verbindungselement 20 (Fig. 7) mit einem schlittenartigen Vorsprung eingeführt und dort verrastet werden kann. Im vorliegenden Beispiel ist also das Rastverbindungselement 19 ein weibliches Rastverbindungselement und das entsprechende Rastverbindungselement 20 ein männliches Rastverbindungselement.

In Fig. 5 ist nun ein Einlegen des Rastelements 10 in das Aufnahmeelement 16 und damit den Rest des ersten Kantenclip-Moduls 2 entsprechend einer ersten Richtung R1 relativ zum restlichen Kantenclip-Modul 2 dargestellt. Dadurch, dass das Einlegen des Rastelements 10 in Abwesenheit des zweiten Kantenclip-Moduls 3 erfolgen kann, ist die Freiheit bei der Gestaltung des Rastelements 10 mit den entsprechenden Halte- und Führungselementen 14, 14', 15, 15'sowie der Rastklauen 11 besonders groß.

In Fig. 6 ist entsprechend das erste Kantenclip-Modul 2 aus Fig. 5 mit eingelegtem und durch die Halteelemente 14, 14' befestigtem Rastelement 10 gezeigt. Dieses weist somit insgesamt senkrecht zur Haupterstreckungsebene des Spalts 4 eine Erstreckung C auf.

In Fig. 7 ist entsprechend Fig. 5 das Einlegen des Rastelements 10, welches vorliegend für beide Kantenclip-Module 2, 3 baugleich ausgeführt ist, in der ersten Richtung R1 relativ zum restlichen Kantenclip-Modul 3 dargestellt.

Fig. 8 zeigt das resultierende vollständige zweite Kantenclip-Modul 3 mit eingelegtem und verbundenem Rastelement 10 sowie dem als Gegenstück zu dem Rastverbindungselement 19 des ersten Kantenclip-Moduls 2 ausgeführten weiteren Rastverbindungselement 20, hier mit einem schlittenartigen Vorsprung in positiver x-Richtung. Das zweite Rastverbindungselement 20 kann somit vorliegend auch als verrastender Stecker beschrieben werden, welcher in das verrastende Rastverbindungselement 19 wie in eine Dose eingeführt und dort verrastet wird.

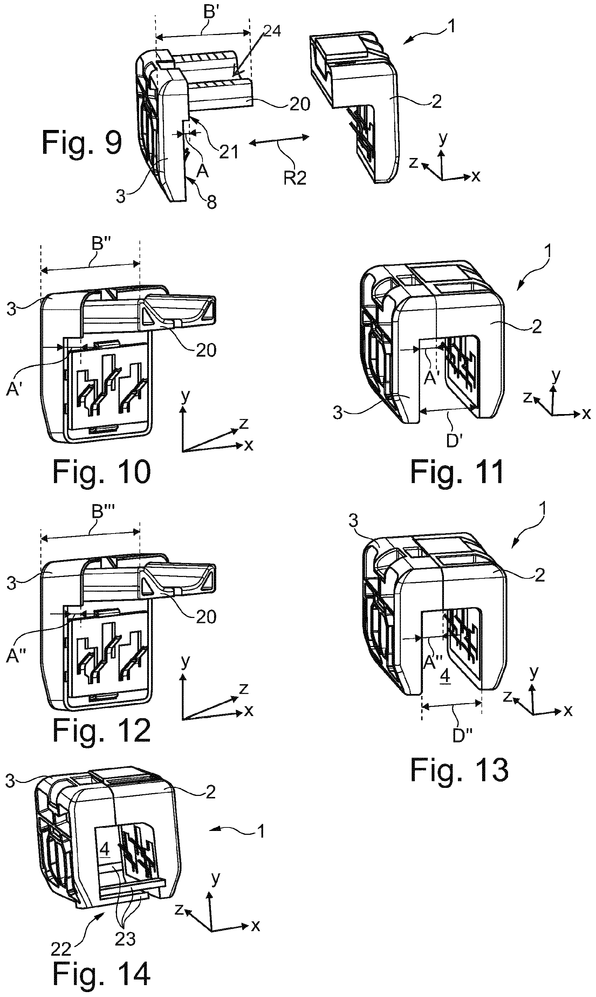

Fig. 9 zeigt, dass die beiden Kantenclip-Module 2, 3 entlang einer zweiten Richtung R2 ineinander geschoben und dort miteinander unter Erzeugen einer Rastverbindung verrastet werden können, um so einen einsatzbereiten Kantenclip 1 zu bilden. Das gezeigte zweite Kantenclip-Modul 3 hat dabei vorliegend in x-Richtung, also in einer Richtung senkrecht zur Haupterstreckungsebene des Spalts 4, eine Erstreckung B', welche größer ist als die entsprechende Erstreckung B des zweiten Kantenclip-Moduls aus Fig. 8. Dies wird dadurch bewirkt, dass das Rastverbindungselement 20 im gezeigten Beispiel auf einen Sockel 21 angeordnet ist, welcher in x-Richtung ausgehend von der Wange 8 und damit der Haupterstreckungsebene des Rastelements 10 die Dicke A aufträgt. Somit lässt sich bei unverändertem Rastverbindungselement 20 durch eine entsprechende Wahl der Dicke A des Sockels 21 die Dicke D des Spalts 4 einstellen. Alternativ oder zusätzlich kann die Länge des (männlichen) Rastverbindungselementes 20 im gezeigten Beispiel variiert werden, um die Erstreckung B' zu variieren und somit die Dicke D des Spalts 4 anzupassen. Die Dicke des Spalts 4 kann in einem Bereich von 8 mm bis 16 mm angepasst werden oder anpassbar sein.

Im gezeigten Beispiel sind erste Richtung R1 und zweite Richtung R2 gleich, also parallel. Es sind aber auch andere Ausgestaltungen denkbar, in welchen das nicht der Fall ist. Insbesondere können die Rastverbindungselemente 19, 20 auch derart gestaltet sein, dass die zweite Richtung R2 quer zur ersten Richtung R1 verläuft, bevorzugt in z-Richtung.

Im vorliegenden Beispiel ist das Rastverbindungselement 20 mit einem Rastverbindungs-Unterelement 24 versehen, das bei der Verbindung der beiden Kantenclip-Module 2, 3 durch die Rastverbindungselemente 19, 20 eine Verrastung in mehreren unterschiedlichen Positionen entlang der Rastrichtung R2 ermöglicht, so dass entsprechend der unterschiedlichen Positionen unterschiedliche Breiten für den Spalt 4 eingestellt werden können.

Figs 10 bis 13 zeigen entsprechend unterschiedliche zweite Kantenclip-Module 3 deren Erstreckung B, B', B", B‴ in der x-Richtung senkrecht zur Haupterstreckungsebene des Spalts 4 liegt, und damit dessen Dicke D, D', D" durch Variieren der Dicke A, A', A" des Sockels 21 angepasst werden kann, ohne dass hierfür das entsprechende Rastverbindungselement 20 des zweiten Kantenclip-Moduls 3 verändert werden muss. Entsprechend kann ein und das selbe erste Kantenclip-Modul 2, d.h. ein erstes Kantenclip-Modul 2 eines einzigen ersten Typs mit unterschiedlichen zweiten Kantenclip-Modulen 3 jeweiliger unterschiedlicher zweiter Kantenclip-Modultypen - hier den Modulytypen mit unterschiedlicher Erstreckung B, B', B", B‴ - kombiniert werden und so mit geringem Fertigungsaufwand ein variabel einsetzbarer Kantenclip 1 bereitgestellt werden. Die gewählte Lösung mit unterschiedlichen auftragenden Sockeln 21 kann auch auf besonders effiziente Weise hergestellt werden, nämlich indem ein modulares Spritzgußwerkzeug für das zweite Kantenclip-Modul genutzt wird.

Analog zu der hier dargestellten Variierung des zweiten Kantenclip-Moduls 3 mit unterschiedlichen Modultypen kann in vorteilhafter Weise auch das erste Kantenclip-Modul 2 variiert werden, welches entsprechend beispielsweise nicht nur ein als Öse ausgeführtes Halteelement 9, sondern in den unterschiedlichen Kantenclip-Modultypen auch andersartig ausgebildete Halteelemente 9 aufweisen kann, oder aber beispielsweise auch jeweilige Halteelemente, welche in den unterschiedlichen Kantenclip-Modultypen relativ zum Spalt 4 an anderen Positionen des Kantenclip-Moduls 3 ausgebildet sein können.

In Fig. 14 ist schließlich eine weitere beispielhafte Ausführungsform eines Kantenclips 1 dargestellt. Der dortige Kantenclip 1 weist an einer Mündung 22 des Spalts 4 mehrere Transport-Eindringschutzelemente 23 auf, welche ein unabsichtliches Einführen von Gegenständen, beispielsweise Kabeln oder menschlichen Fingern in den Spalt 4 verhindern und somit in unmontiertem Zustand des Kantenclips 1 eine Verletzungs- und/oder Beschädigungsgefahr reduzieren. Vorliegend sind die Transport-Eindringschutzelemente 23 als Finger an dem zweiten Kantenclip-Modul 3 ausgebildet, welche in Richtung des anderen Kantenclip-Moduls 2 ragen. Die Transport-Eindringschutzelemente 23 können in Ihrer Dicke und damit Stabilität so gewählt werden, dass sie entweder mit einem Messer kurz vor der Endmontage des Kantenclips 1 entfernt werden können, oder aber sogar durch das Objekt 6 bei ausreichend großem Montagedruck einfach abgebrochen werden.

## Patentansprüche

1. Modularer Kantenclip (1) zum Befestigen eines Befestigungselementes an einer Kante (5) eines Objektes (6), mit
- einem ersten Kantenclip-Modul (2), welches aufweist:
i) ein Halteelement (9) zum Befestigen des Befestigungselementes an dem Kantenclip-Modul (1), und
ii) ein Rastverbindungselement (19) zum Verbinden des ersten Kantenclip-Moduls (2) mit dem zweiten Kantenclip-Modul (3) durch eine Rastverbindung;
und mit
- einem zweiten Kantenclip-Modul (3), welches aufweist:
i) ein als Gegenstück zu dem Rastverbindungselement (19) des ersten Kantenclip-Moduls (2) ausgeführtes Rastverbindungselement (20) zum Verbinden des ersten Kantenclip-Moduls (2) mit dem zweiten Kantenclip-Modul (3) durch die Rastverbindung;
- wobei das erste und das zweite Kantenclip-Modul (2, 3) in durch die Rastverbindungselemente (19, 20) verbundenem Zustand zwischen den jeweiligen Rastelementen (10) einen Spalt (4) bilden, in welchen die Kante (5) des Objekts (6) zum Befestigen des Kantenclips an der Kante (5) in einer Einführrichtung (E) einführbar ist,
wobei
- das erste Kantenclip-Modul (2) ein erstes Rastelement (10) mit zumindest zwei Rastklauen (11) aufweist, welche in Zusammenwirken mit einem als Gegenlager dienenden zweiten Kantenclip-Modul (3) ausgebildet sind zum Verrasten des Kantenclips (1) an der Kante (5), und
- das zweite Kantenclip-Modul (3) ein zweites Rastelement (10) mit zumindest zwei Rastklauen (11) aufweist, welche in Zusammenwirken mit dem als Gegenlager dienenden ersten Kantenclip-Modul (2) ausgebildet sind zum Verrasten des Kantenclips (1) an der Kante (5), und
- die Kantenclip-Module (2, 3) je ein Aufnahmeelement (16) zum Aufnehmen des jeweiligen Rastelementes (10) aufweisen.

2. Kantenclip (1) nach Anspruch 1,
**dadurch gekennzeichnet, dass**
Aufnahmeelement (16) und Halteelement (9) und Rastverbindungselement (19) des ersten Kantenclip-Moduls (2) sowie Aufnahmeelement (16) und Rastverbindungselement (20) des zweiten Kantenclip-Moduls (3) jeweils einteilig aus einem Kunststoff gefertigt sind.

3. Kantenclip (1) nach einem der vorhergehenden Ansprüche,
**dadurch gekennzeichnet, dass**
die Rastelemente (10) jeweils zumindest ein Rastelement-Halteelement (14, 14') zum Halten des Rastelementes (10) an dem Aufnahmeelement (16) aufweisen, dessen Haupterstreckungsrichtung längs der Einführrichtung (E) verläuft, wobei das Rastelement-Halteelement (14, 14') insbesondere ein Rastelement wie eine Öse, ist oder umfasst.

4. Kantenclip (1) nach einem der vorhergehenden Ansprüche,
**dadurch gekennzeichnet, dass**
die Rastelemente (10) jeweils zumindest ein Führungselement (15, 15') zum Führen des Rastelementes (10) relativ zum Aufnahmeelement (16) aufweisen, wobei die Haupterstreckungsrichtung des zumindest einen Führungselements (15, 15') quer zu der Einführrichtung (E) verläuft, wobei das Führungselement (15, 15') insbesondere eine Lasche ist oder umfasst.

5. Kantenclip (1) nach Anspruch 3 oder 4,
**dadurch gekennzeichnet, dass** das Rastelement-Halteelement (14, 14') und Führungselement (15, 15') eines Rastelementes (10) jeweils voneinander verschiedene Elemente sind

6. Kantenclip (1) nach einem der vorhergehenden Ansprüche,
**dadurch gekennzeichnet, dass**
zumindest eine der Rastklauen (11) von einem der Rastelemente (10) eine Hohlkehle (12) aufweist, insbesondere an einem Übergang von einem aus einer Haupterstreckungsebene des jeweiligen Rastelementes (10) herausragenden Teils der Rastklaue (11) zu einem in der Haupterstreckungsebene liegenden anderen Teil des Rastelements (10).

7. Kantenclip (1) nach einem der vorhergehenden Ansprüche,
**dadurch gekennzeichnet, dass**
die Rastelemente (10) der unterschiedlichen Kantenclip-Module (2, 3) baugleich ausgeführt sind, insbesondere mit Rastklauen (11) aus Metall, besonders bevorzugt je einteilig aus einem Metall-Stanz-Biege-Teil.

8. Kantenclip (1) nach einem der vorhergehenden Ansprüche,
**dadurch gekennzeichnet, dass**
das erste Kantenclip-Modul (2) und/oder das zweite Kantenclip-Modul (3) an einer Mündung des Spaltes (22), durch welche die Kante (5) des Objekts (6) zum Befestigen des Kantenclips (1) an der Kante (5) in der Einführrichtung (E) einführbar ist, oder im Spalt (4) zumindest ein Transport-Eindringschutzelement (23) aufweist, insbesondere in Form eines oder mehrerer Finger, welche sich quer zur Einführrichtung (E) erstrecken.

9. Kantenclip (1) nach einem der vorhergehenden Ansprüche,
**dadurch gekennzeichnet, dass**
zumindest eines der Rastverbindungselemente (19, 20) als ein Mehrfach-Rastverbindungselement mit einem Rastverbindungs-Unterelement (24) ausgebildet ist, welches bei dem Verbinden der beiden Kantenclip-Module (2, 3) mit dem Rastverbindungselement (19, 20) ein Verrasten in mehreren unterschiedlichen Positionen entlang einer Verrastrichtung (R2) erlaubt, sodass den unterschiedlichen Positionen entsprechend unterschiedliche Breiten (D, D', D") für den Spalt (4) einstellbar sind.

10. Kantenclip-System mit einem Kantenclip (1) nach einem der vorhergehenden Ansprüche,
**gekennzeichnet durch**
- mehrere unterschiedliche erste Kantenclip-Module (2) und/oder
- mehrere unterschiedliche zweite Kantenclip-Module (3),
wobei mittels der jeweiligen Rastverbindungselemente (19, 20) ein beliebiges der ersten Kantenclip-Module (2) mit einem beliebigen der zweiten Kantenclip-Module (3) verbindbar ist.

11. Kantenclip-System nach Anspruch 10,
**dadurch gekennzeichnet, dass**
die unterschiedlichen ersten Kantenclip-Module (2) jeweils unterschiedliche Halteelemente (9) aufweisen, welche jeweils zum Befestigen von Befestigungselementen unterschiedlicher Typen an den ersten Kantenclip-Modulen (2) ausgebildet sind und/oder welche jeweils an unterschiedlichen Positionen relativ zu dem Spalt (4) angeordnet sind.

12. Kantenclip-System nach einem der Ansprüche 10 oder 11,
**dadurch gekennzeichnet, dass**
die unterschiedlichen ersten Kantenclip-Module (2) oder die unterschiedlichen zweiten Kantenclip-Module (3) jeweils eine unterschiedlich große Erstreckung (B, B', B", B‴, C) in einer Richtung senkrecht zur Haupterstreckungsebene des Spaltes (4) aufweisen, sodass durch Kombination unterschiedlicher Kantenclip-Module (2, 3) des einen Kantenclip-Modultyps mit einem gleichbleibenden Kantenclip-Modul (3, 2) des anderen Modultyps bei Verbinden des jeweils kombinierten ersten und zweiten Kantenclip-Moduls (2, 3) durch die Rastverbindungselemente (19, 20) unterschiedlich breite Spalte (4), bevorzugt in einem Bereich von 8mm bis 16mm, bildbar sind.

13. Kantenclip-System nach Anspruch 12,
**dadurch gekennzeichnet, dass**
die unterschiedlichen ersten Kantenclip-Module (2) jeweils unterschiedliche Halteelemente und/oder Halteelemente an unterschiedlichen Positionen relativ zu dem Spalt aufweisen und nur die unterschiedlichen zweiten Kantenclip-Module (3) jeweils eine unterschiedlich große Erstreckung (B, B', B", B‴) in der Richtung senkrecht zur Haupterstreckungsebene des Spalts (4) aufweisen.

14. Kantenclip-Modul geeignet zum Einsatz als erstes oder zweites Kantenclip-Modul (2,3) eines Kantenclip (1) der Ansprüche 1 bis 10.

15. Verfahren zum Vormontieren eines modularen Kantenclips (1), welcher zum Befestigen eines Befestigungselementes an einer Kante (5) eines Objektes (6) ausgebildet ist und ein erstes Kantenclip-Modul (2) sowie ein zweites Kantenclip-Modul (3) aufweist, mit:
- einem jeweiligen Einlegen eines Rastelementes (10) mit zumindest zwei Rastklauen (11) in das jeweilige restliche Kantenclip-Modul in einer ersten Richtung (R1) relativ zum restlichen Kantenclip-Modul;
- einem Verbinden der jeweiligen Rastelemente (10) mit dem jeweils zugeordneten restlichen Kantenclip-Modul;
- einem Erzeugen einer Rastverbindung zwischen den beiden Kantenclip-Modulen (2, 3) durch Ineinanderschieben der beiden Kantenclip-Module (2, 3) entlang einer zweiten Richtung (R2) relativ zu den jeweiligen Kantenclip-Modulen (2, 3), wobei
- die erste Richtung (R1) und/oder die zweite Richtung (R2) quer verlaufen zu einer Haupterstreckungsebene eines Spaltes (4) zwischen den Kantenclip-Modulen (2, 3), in welchen die Kante (5) des Objekts (6) zum Befestigen des Kantenclips (1) an der Kante (5) in einer Einführrichtung (E) einführbar ist.

## Claims

1. Modular edge clip (1) for fastening a fastening element to an edge (5) of an object (6), comprising
- a first edge clip module (2), which has:
i) a retaining element (9) for fastening the fastening element to the edge clip module (1), and
ii) a latching connection element (19) for connecting the first edge clip module (2) to the second edge clip module (3) by way of a latching connection;
and comprising
- a second edge clip module (3), which has:
i) a latching connection element element (20) for connecting the first edge clip module (2) to the second edge clip module (3) by way of the latching connection, which latching connection element element (20) is configured as a counter-part of the latching connection element (19) of the first edge clip module (2);
- wherein the first and the second edge clip module (2, 3), in a state connected by the latching connection elements (19, 20), form a gap (4) between the respective latching elements (10), into which the edge (5) of the object (6) can be inserted in an insertion direction (E) in order to fasten the edge clip to the edge (5),
wherein
- the first edge clip module (2) comprises a first latching element (10) having at least two latching claws (11) which, in collaboration with a second edge clip module (3) that serves as a counter-bearing, are designed to latch the edge clip (1) onto the edge (5), and
- the second edge clip module (3) comprises a second latching element (10) having at least two latching claws (11) which, in collaboration with the first edge clip module (2) that serves as a counter-bearing, are designed to latch the edge clip (1) onto the edge (5), and
- the edge clip modules (2, 3) each have a receiving element (16) for receiving the respective latching element (10).

2. Edge clip (1) according to the preceding claim,
**characterized in that**
the receiving element (16) and the retaining element (9) and the latching connection element (19) of the first edge clip module (2) and the receiving element (16) and the latching connection element (20) of the second edge clip module (3) are in each case manufactured in one piece from a plastic.

3. Edge clip (1) according to any one of the preceding claims,
**characterized in that**
the latching elements (10) each have at least one latching-element retaining element (14, 14') for retaining the latching element (10) on the receiving element (16), the main extension direction of which retaining element extends along the insertion direction (E), wherein the latching-element retaining element (14, 14') is or includes in particular a latching element such as an eyelet.

4. Edge clip (1) according to any one of the preceding claims,
**characterized in that**
the latching elements (10) each have at least one guide element (15, 15') for guiding the latching element (10) relative to the receiving element (16), the main extension direction of which guide element extends transversely to the insertion direction (E), wherein the guide element (15, 15') is or includes in particular a tab.

5. Edge clip (1) according to the two preceding claims,
**characterized in that**
the latching-element retaining element (14, 14') and the guide element (15, 15') of a latching element (10) are in each case elements which are different from one another.

6. Edge clip (1) according to any one of the preceding claims,
**characterized in that**
at least one of the latching claws (11) of a latching element (10) has a fillet (12), in particular at a transition from a portion of the latching claw (11) that protrudes out of a main extension plane of the respective latching element (10) to another portion of the latching element (10) that lies in the main extension plane.

7. Edge clip (1) according to any one of the preceding claims,
**characterized in that**
the latching elements (10) of the different edge clip modules (2, 3) are structurally identical, in particular having latching claws (11) made of metal, particularly preferably each formed in one piece from a stamped and bent metal part.

8. Edge clip (1) according to any one of the preceding claims,
**characterized in that**
the first edge clip module (2) and/or the second edge clip module (3) comprises at least one element (23) for preventing penetration during transport at a mouth of the gap (22) through which the edge (5) of the object (6) can be inserted in the insertion direction (E) in order to fasten the edge clip (1) to the edge (5), or in the gap (4), in particular in the form of one or more fingers which extend transversely to the insertion direction (E).

9. Edge clip (1) according to any one of the preceding claims,
**characterized in that**
at least one of the latching connection elements (19, 20) is designed as a multiple latching connection element which, when the two edge clip modules (2, 3) are connected by the latching connection element (19, 20), enables a latching in multiple different positions along a latching direction (R2) so that different widths (D, D', D") can be set for the gap (4) according to the different positions.

10. Edge clip system including an edge clip (1) according to any one of the preceding claims,
**characterized by**
- a plurality of different first edge clip modules (2) and/or
- a plurality of different second edge clip modules (3),
wherein any of the first edge clip modules (2) can be connected to any of the second edge clip modules (3) by means of the respective latching connection elements (19, 20).

11. Edge clip system according to the preceding claim,
**characterized in that**
the different first edge clip modules (2) each have different retaining elements (9), which are each designed to fasten fastening elements of different types to the first edge clip modules (2) and/or which are each arranged at different positions relative to the gap (4).

12. Edge clip system according to any one of the two preceding claims,
**characterized in that**
the different first edge clip modules (2) or the different second edge clip modules (3) each have a different length of extension (B, B', B", B‴, C) in a direction perpendicular to the main extension plane of the gap (4) so that, by combining different edge clip modules (2, 3) of one edge clip module type with an edge clip module (3, 2) of the other module type that stays the same, gaps (4) of different width can be formed when connecting the respectively combined first and second edge clip module (2, 3) by way of the latching connection elements (19, 20).

13. Edge clip system according to the preceding claim,
**characterized in that**
the different first edge clip modules (2) each have different retaining elements and/or retaining elements at different positions relative to the gap, and only the different second edge clip modules (3) each have a different length of extension (B, B', B", B‴) in the direction perpendicular to the main extension plane of the gap (4).

14. Edge clip module suitable for use as first or second edge clip module (2, 3) of an edge clip (1) of claims 1 to 10.

15. Method for pre-assembling a modular edge clip (1) which is designed to fasten a fastening element to an edge (5) of an object (6) and has a first edge clip module (2) and a second edge clip module (3), which method comprises:
- respectively inserting a latching element (10) having at least two latching claws (11) into the respective rest of the edge clip module in a first direction (R1) relative to the rest of the edge clip module;
- connecting the respective latching elements (10) to the respectively associated rest of the edge clip module;
- establishing a latching connection between the two edge clip modules (2, 3) by sliding the two edge clip modules (2, 3) one into the other along a second direction (R2) relative to the respective edge clip modules (2, 3), wherein
- the first direction (R1) and/or the second direction (R2) extend transversely to a main extension plane of a gap (4) between the edge clip modules (2, 3), into which the edge (5) of the object (6) can be inserted in an insertion direction (E) in order to fasten the edge clip (1) to the edge (5).

## Revendications

1. Pince de bordure modulaire (1) pour fixer un élément de fixation à une bordure (5) d'un objet (6), comprenant
- un premier module de pince de bordure (2), qui comprend :
i) un élément de retenue (9) pour fixer l'élément de fixation au module de pince de bordure (1), et
ii) un élément de connexion par encliquetage (19) pour connecter le premier module de pince de bordure (2) au second module de pince de bordure (3) par le biais d'une connexion par encliquetage ;
et comprenant
- un deuxième module de pince de bordure (3), qui comprend :
i) un élément d'assemblage par encliquetage (20) pour relier le premier module de pince de bordure (2) au deuxième module de pince de bordure (3) au moyen de l'assemblage par encliquetage, lequel élément d'assemblage par encliquetage (20) est configuré comme une contrepartie de l'élément d'assemblage par encliquetage (19) du premier module de pince de bordure (2) ;
- où le premier et le second module de pince de bordure (2, 3), dans un état de connexion par les éléments de connexion par encliquetage (19, 20), forment une fente (4) entre les éléments d'encliquetage respectifs (10), dans lequel la bordure (5) de l'objet (6) peut être insérée dans une direction d'insertion (E) afin de fixer la pince de bordure à la bordure (5),
où
- le premier module de pince de bordure (2) comprend un premier élément d'encliquetage (10) doté d'au moins deux griffes d'encliquetage (11) qui, en collaboration avec un deuxième module de pince de bordure (3) servant de contre-appui, sont conçues pour encliqueter la pince de bordure (1) sur la bordure (5), et
- le deuxième module de pince de bordure (3) comprend un deuxième élément d'encliquetage (10) comportant au moins deux griffes d'encliquetage (11) qui, en collaboration avec le premier module de pince de bordure (2) qui sert de contre-appui, sont conçues pour encliqueter la pince de bordure (1) sur la bordure (5), et
- les modules de pinces de bordure (2, 3) comportent chacun un élément de réception (16) destiné à recevoir l'élément d'encliquetage respectif (10).

2. Pince de bordure (1) selon la revendication précédente,
**caractérisé par le fait que**
l'élément de réception (16), l'élément de retenue (9) et l'élément de connexion par encliquetage (19) du premier module de pince de bordure (2) et l'élément de réception (16) et l'élément de connexion par encliquetage (20) du deuxième module de pince de bordure (3) sont fabriqués d'une seule pièce en matière plastique.

3. Pince de bordure (1) selon l'une quelconque des revendications précédentes,
**caractérisée par le fait que**
les éléments d'encliquetage (10) comportent chacun au moins un élément de retenue de l'élément d'encliquetage (14, 14') pour retenir l'élément d'encliquetage (10) sur l'élément de réception (16), la direction d'extension principale de cet élément de retenue s'étendant suivant la direction d'insertion (E), où l'élément de retenue de l'élément d'encliquetage (14, 14') est ou comprend en particulier un élément d'encliquetage tel qu'un œillet.

4. Pince de bordure (1) selon l'une quelconque des revendications précédentes,
**caractérisée par le fait que**
les éléments d'encliquetage (10) comportent chacun au moins un élément de guidage (15, 15') pour guider l'élément d'encliquetage (10) par rapport à l'élément de réception (16), la direction principale d'extension de cet élément de guidage s'étendant transversalement à la direction d'insertion (E), où l'élément de guidage (15, 15') est ou comprend en particulier une languette.

5. Pince de bordure (1) selon les deux revendications précédentes,
**caractérisée par le fait que**
l'élément de retenue de l'élément d'encliquetage (14, 14') et l'élément de guidage (15, 15') d'un élément d'encliquetage (10) sont dans chaque cas des éléments différents l'un de l'autre.

6. Pince de bordure (1) selon l'une quelconque des revendications précédentes,
**caractérisée par le fait que**
au moins une des griffes d'encliquetage (11) d'un élément d'encliquetage (10) présente un filet (12), en particulier au niveau d'une transition entre une partie de la griffe d'encliquetage (11) qui dépasse d'un plan d'extension principal de l'élément d'encliquetage (10) respectif et une autre partie de l'élément d'encliquetage (10) qui se trouve dans le plan d'extension principal.

7. Pince de bordure (1) selon l'une quelconque des revendications précédentes,
**caractérisée par le fait que**
les éléments d'encliquetage (10) des différents modules (2, 3) de la pince de bordure sont structurellement identiques, en particulier avec des griffes d'encliquetage (11) en métal, en particulier de préférence chacune formée d'une seule pièce à partir d'une pièce métallique estampée et pliée.

8. Pince de bordure (1) selon l'une quelconque des revendications précédentes,
**caractérisée par le fait que**
le premier module de pince de bordure (2) et/ou le deuxième module de pince de bordure (3) comprend au moins un élément (23) empêchant la pénétration pendant le transport au niveau d'une embouchure de la fente (22) à travers laquelle la bordure (5) de l'objet (6) peut être insérée dans la direction d'insertion (E) pour fixer la pince de bordure (1) sur la bordure (5), ou dans la fente (4), en particulier sous la forme d'un ou plusieurs doigts qui s'étendent transversalement par rapport à la direction d'insertion (E).

9. Pince de bordure (1) selon l'une quelconque des revendications précédentes,
**caractérisée par le fait que**
au moins un des éléments de connexion par encliquetage (19, 20) est conçu comme un élément de connexion par encliquetage multiple qui, lorsque les deux modules de pince de bordure (2, 3) sont connectés par l'élément de connexion par encliquetage (19, 20), permet un encliquetage dans plusieurs positions différentes le long d'une direction d'encliquetage (R2) de sorte que différentes largeurs (D, D', D") peuvent être réglées pour la fente (4) en fonction des différentes positions.

10. Système de pince de bordure comprenant une pince de bordure (1) selon l'une quelconque des revendications précédentes,
**caractérisé par**
- une pluralité de modules différents de première pince de bordure (2) et/ou
- une pluralité de modules différents de deuxième pince de bordure (3),
où n'importe lequel des premiers modules de pinces de bordure (2) peut être connecté à n'importe lequel des seconds modules de pinces de bordure (3) au moyen des éléments de connexion par encliquetage respectifs (19, 20).

11. Système de pince de bordure selon la revendication précédente,
**caractérisé par le fait que**
les différents premiers modules de pinces de bordure (2) comportent chacun des éléments de retenue (9) différents, qui sont chacun conçus pour fixer des éléments de fixation de types différents sur les premiers modules de pinces de bordure (2) et/ou qui sont chacun disposés à des positions différentes par rapport à la fente (4).

12. Système de pince de bordure selon l'une quelconque des deux revendications précédentes,
**caractérisé par le fait que**
les différents modules de première pince de bordure (2) ou les différents modules de deuxième pince de bordure (3) ont chacun une longueur d'extension (B, B', B", B‴, C) différente dans une direction perpendiculaire au plan d'extension principal de la fente (4) de sorte que, en combinant différents modules de pince de bordure (2, 3) d'un type de module de pince de bordure avec un module de pince de bordure (3, 2) de l'autre type de module qui reste le même, des fentes (4) de différentes largeurs peuvent être formées lors de la connexion du premier et du deuxième module de pince de bordure (2, 3) respectivement combinés au moyen des éléments de connexion par encliquetage (19, 20).

13. Système de pince de bordure selon la revendication précédente,
**caractérisé par le fait que**
les différents premiers modules de pinces de bordure (2) ont chacun des éléments de retenue différents et/ou des éléments de retenue à des positions différentes par rapport à la fente, et seuls les différents seconds modules de pinces de bordure (3) ont chacun une longueur d'extension différente (B, B', B", B"") dans la direction perpendiculaire au plan d'extension principal de la fente (4).

14. Module de pince de bordure apte à être utilisé comme premier ou deuxième module de pince de bordure (2, 3) d'une pince de bordure (1) des revendications 1 à 10.

15. Procédé de pré-assemblage d'une pince de bordure modulaire (1) destinée à fixer un élément de fixation sur une bordure (5) d'un objet (6) et comportant un premier module de pince de bordure (2) et un deuxième module de pince de bordure (3), lequel procédé consiste à :
- insérer respectivement un élément d'encliquetage (10) ayant au moins deux griffes d'encliquetage (11) dans le reste respectif du module de pince de bordure dans une première direction (R1) par rapport au reste du module de pince de bordure ;
- connecter les éléments d'encliquetage respectifs (10) au reste du module de pince de bordure qui leur est respectivement associé ;
- établir un encliquetage entre les deux modules de pinces de bordure (2, 3) en faisant glisser les deux modules de pinces de bordure (2, 3) l'un dans l'autre le long d'une deuxième direction (R2) par rapport aux modules de pinces de bordure respectifs (2, 3), où
- la première direction (R1) et/ou la deuxième direction (R2) s'étendent transversalement à un plan d'extension principal d'une fente (4) entre les modules de pinces de bordure (2, 3), dans laquelle la bordure (5) de l'objet (6) peut être insérée dans une direction d'insertion (E) afin de fixer la pince de bordure (1) à la bordure (5).
